(19) Europäisches Patentamt
European Patent Office
Office européen des brevets

(11) **EP 1 017 157 B1**

(12) **EUROPÄISCHE PATENTSCHRIFT**

(45) Veröffentlichungstag und Bekanntmachung des Hinweises auf die Patenterteilung:
**23.05.2007   Patentblatt 2007/21**

(51) Int Cl.:
*H02M 7/162* *(2006.01)*       *H02M 1/12* *(2006.01)*

(21) Anmeldenummer: **99124910.3**

(22) Anmeldetag: **13.12.1999**

(54) **Verfahren zur Regelung eines nichtharmonischen Anteils im Netzstrom eines netzseitigen Stromrichters und Vorrichtung zur Durchführung des Verfahrens**

Method for the control of a non-harmonic network current portion of a converter, and device for carrying out the method

Méthode pour le contrôle d'une portion non harmonique du courant de réseau d'un convertisseur et dispositif pour mettre en oeuvre la méthode

(84) Benannte Vertragsstaaten:
**AT BE CH CY DE DK ES FI FR GB GR IE IT LI LU MC NL PT SE**

(30) Priorität: **28.12.1998   DE 19860393**

(43) Veröffentlichungstag der Anmeldung:
**05.07.2000   Patentblatt 2000/27**

(73) Patentinhaber: **Bombardier Transportation GmbH 13627 Berlin (DE)**

(72) Erfinder: **Eisele, Andreas 79807 Lottstetten (DE)**

(74) Vertreter: **Cohausz & Florack Patent- und Rechtsanwälte Postfach 10 18 30 40009 Düsseldorf (DE)**

(56) Entgegenhaltungen:
**EP-A- 0 598 465          WO-A-91/03862**
**WO-A-96/08862          DE-A- 3 824 202**
**DE-A- 19 542 163**

• **BRONSTEIN I.N.; SEMENDJAJEW K.A.: 'Taschenbuch der Mathematik', 1984, G. GROSCHE, DR. V. ZIEGLER; D. ZIEGLER, LEIPZIG, ISBN 3-87144-492-8 * Seite 616 ***

## Beschreibung

### Technisches Gebiet

Die Erfindung bezieht sich auf das Gebiet der Leistungselektronik. Sie geht aus von einem Verfahren zur Regelung eines nichtharmonischen Anteils im Netzstrom eines netzseitigen Stromrichters, welcher insbesondere in einphasigen Wechselspannungsnetzen, insbesondere Wechselspannungsbahnnetzen eingesetzt wird und einer Vorrichtung zur Durchführung des Verfahrens gemäss dem Oberbegriff der unabhängigen Ansprüche.

### Stand der Technik

Zur Versorgung elektrischer Traktionsmaschinen insbesondere für Bahnantriebe werden diese aus einem Bahnnetz insbesondere aus einem einphasigen Wechselspannungsbahnnetz mit beispielsweise 16 2/3Hz und 15kV oder 50Hz und 25kV über einen Netztransformator, einen netzseitigen Stromrichter und einem Antriebswechselrichter gespeist, wie aus der DE 40 37 531 A1 bekannt ist. Der netzseitige Stromrichter besteht aus einem Gleichrichter und einem gleichspannungsseitigen Gleichspannungszwischenkreis, wobei der Gleichrichter als Vierquadrantensteller ausgeführt ist. Die Zwischenkreisspannung wird mittels eines Spannungsreglers mit unterlagertem Stromregler für den Strom durch die Sekundärwicklung des Netztransformators geregelt. Dieser Stromregler bildet an seinem Ausgang eine Reglersteuerspannung, welche in gängiger Weise in einem Pulsweitenmodulator pulsweitenmoduliert wird. Der Pulsweitenmodulator erzeugt dann an seinem Ausgang eine pulsweitenmodulierte Steuerspannung zur Ansteuerung von Halbleiterleistungsschaltern im genannten Gleichrichter. Nach der DE 40 37 531 A1 ist bei einer Ausführungsform mit mehreren netzseitigen Stromrichtern und somit mit mehreren Gleichrichtern für jeden dieser Gleichrichter eine Sekundärwicklung des Netztransformators vorgesehen, welche mit dem jeweiligen Gleichrichter verbunden ist. Für jeden eingesetzten Gleichrichter ist dann jeweils ein dem Spannungsregler der Zwischenkreisspannung unterlagerter Stromregler für den Strom durch die jeweilige Sekundärwicklung vorgesehen. Die Summe der Ströme in den einzelnen Sekundärwicklungen des Netztransformators ergibt bezogen auf die Primärseite des Netztransformators dann den Netzstrom.

Die WO 96/08862 A1 offenbart ein Verfahren zur Regelung eines als Netzstromrichter fungierenden Vierquadrantenstellers, der ausgangsseitig über einen Gleichspannungs-Zwischenkreis und Pulswechselrichter auf Drehstromantriebe speist und der eingangsseitig an ein Wechselspannungsnetz, vorzugsweise über einen Mehrwicklungstransformator, mit Sekundärwicklungen für den Vierquadrantensteller und zusätzliche Verbraucher, zum Beispiel Hilfsbetriebeumrichter und einen Störfiltersatz angeschlossen ist, insbesondere in Anwendung bei fahrleitungsgespeisten Drehstromlakomotiven. Die Stromregelung des Vierquadrantenstellers wird dabei durch eine Störstromregelung ergänzt, die auf eine zu reduzierende Stromharmonische im Fahrdrahtstrom abgestimmt diese periodisch erfasst und in geeigneter Weise in Wirk- und Blindanteile zerlegt, zum Beispiel in Form zweier orthogonaler Komponenten oder nach Betrag und Winkel, die getrennten Regelkreisen der Störstromregelung zugeführt werden, die auf Reinhaltung definierter Sollwerte, vorzugsweise Null regeln und ausgangsseitig Sollwerte für vom Vierquadrantensteller einzustellende Komponenten der Siromharmonischen liefern.

Im Betrieb von Traktionsmaschinen insbesondere für Bahnantriebe werden vor allem bei niedrigen Drehzahlen nichtharmonische Anteile in Bezug auf die Netzwechselspannung in der Zwischenkreisspannung generiert. Diese werden im Zwischenkreisspannungsregler nur sehr begrenzt ausgeregelt und finden sich somit als nichtharmonische Anteile im Strom in der Sekundärwicklung des Netztransformators wieder, von wo sie in das jeweilige Wechselspannungsbahnnetz übertragen werden und die Netzwechselspannung, insbesondere bei einem schwachen Netz mit hoher Netzimpedanz, verzerren können.

Eine bereits verzerrte Netzwechselspannung, hervorgerufen durch andere Fahrzeuge insbesondere älterer Bauart, kann über den Netztransformator und den netzseitigen Stromrichter den Spannungsregler der Zwischenkreisspannung derart anregen, dass dieser auftretende nichtharmonische Anteile in Bezug auf die Netzwechselspannung in der Zwischenkreisspannung verstärkt. Diese durch den Zwischenkreisspannungregler in der Zwischenkreisspawung angeregten nichtharmonischen Anteile treten, wie oben bereits erwähnt, wieder als mchtharmonische Ströme in der Sekundärwicklung des Netztrarisformators auf, von wo sie in das jeweilige Wechselspannungsbahnnetz übertragen werden und die Netzwechselspannung weiter verzerren.

Insbesondere bei einem Wechselspannungsbahnnetz von 16 2/3 Hz und 15kV beispielsweise in Deutschland sind Störstrompegel auf der Primärseite des Netztransformators (Netzstrom) für die nichtharmonische Frequenz von 42Hz bezogen auf die Netzwechselspannung von kleiner oder gleich 2A vom Bahnnetzbetreiber zugelassen, da diese Frequenz als Trägerfrequenz für Datensignale für Signalanlagen genutzt wird.

Gängige Steuerungen von Gleichrichtern insbesondere von Vierquadrantenstellern vermögen diese nichtharmonischen Anteile im Netzstrom eines Netzstromrichters nicht in dem Masse zu beherrschen, wie es vom Bahnnetzbetreiber gefordert sind.

## Darstellung der Erfindung

Es ist deshalb die Aufgabe der Erfindung, ein Verfahren zur Regelung eines nichtharmonischen Anteils im Netzstrom eines netzseitigen Stromrichters anzugeben, welches die genannten nichtharmonischen Anteile auf Null ausregelt, sowie eine Vorrichtung anzugeben, mit der das Verfahren in besonders einfacher Weise durchgeführt wird. Diese Aufgabe wird durch die Merkmale der unabhängigen Ansprüche gelöst. Weitere vorteilhafte Ausgestaltungen der Erfindung sind in den Unteransprüchen angegeben.

Beim erfindungsgemässen Verfahren wird aus dem Signal des Netzstromes der Realteil und der Imaginärteil durch eine Fouriertransformation gebildet, welche im wesentlichen einen - auch kleinen - unerwünschten nichtharmonischen Anteil des Netzstromes herausfiltert und im wesentlichen die Grundschwingung des Netzstromes unterdrückt. Der so gebildete Realteil und Imaginärteil des Netzstromes wird mit Hilfe von zwei separaten Proportional-Integral-Reglern (PI-Reglern) jeweils auf einen Referenzwert, vorteilhafterweise 0A, ausgeregelt, so dass am Ausgang der beiden PI-Regler als Stellgrösse jeweils ein Realteil und ein Imaginärteil einer Teilsteuerspannung anliegt. Dadurch ergeben sich Vorteile, dass nämlich der unerwünschte nichtharmonische Anteil im Netzstrom bezogen auf die Netzwechselspannung im wesentlichen eliminiert und der Oberschwingungsgehalt des Netzstromes, insbesondere von nichtharmonischen Schwingungen reduziert wird. Desweiteren wird mit vorteilhaft die im Netzstrom erwünschte Grundschwingung bezogen auf die Netzwechselspannung nicht auf Null ausgeregelt, sondern bleibt im Netzstrom unbeeinflusst.

Die Vorrichtung zur Durchführung des Verfahrens weist einen auf ein Frequenzfenster der Fouriertransformation einstellbaren Fourierfunktionsbildner auf, welcher das Signal des Netzstromes in einen Realteil und einen Imaginärteils fourierzerlegt. Dadurch kann der nichtharmonische Anteil im Netzstrom bezogen auf die Netzwechselspannung sehr einfach eingestellt und somit in gewünschter Weise gefiltert werden. Dem Fourierfunktionsbildner ist jeweils für den Realteil und dem Imaginärteil des fourierzerlegten Netzstromes ein Summierer nachgeschaltet, der jeweils mit einem PI-Regler verbunden ist. Dabei ist der Ausgang eines jeden PI-Reglers mit einem inversen Fourierfunktionsbildner verbunden, der eine Teilsteuerspannung im Zeitbereich generiert. Mit Hilfe des Fourierfunktionsbildners, der nachgeschalteten separaten PI-Regler und des inversen Fourierfunktionsbildners wird eine besonders einfache und somit kostengünstige Vorrichtung zur Regelung eines nichtharmonischen Anteils im Netzstrom des netzseitigen Stromrichters erzielt.

## Kurze Beschreibung der Zeichnungen

Nachfolgend wird die Erfindung anhand von Ausführungsbeispielen im Zusammenhang mit der Zeichnung näher erläutert.

Es zeigen

**Fig. 1** ein Ausführungsbeispiel einer Vorrichtung zur Durchführung des Verfahrens der Regelung nichtharmonischer Anteile im Netzstrom eines netzseitigen Stromrichters,

**Fig.2** Amplituden- und Phasengang im Frequenzbereich eines Fourierfunktionsbildners mit einem nachgeschalteten inversen Fourierfunktionsbildner für einen nichtharmonischen 83 1/3Hz Anteil im Netzstrom und

**Fig.3** Amplituden- und Phasengang im Frequenzbereich eines Fourierfunktionsbildners mit einem nachgeschalteten inversen Fourierfunktionsbildner für einen nichtharmonischen 42Hz Anteil im Netzstrom.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

## Wege zur Ausführung der Erfindung

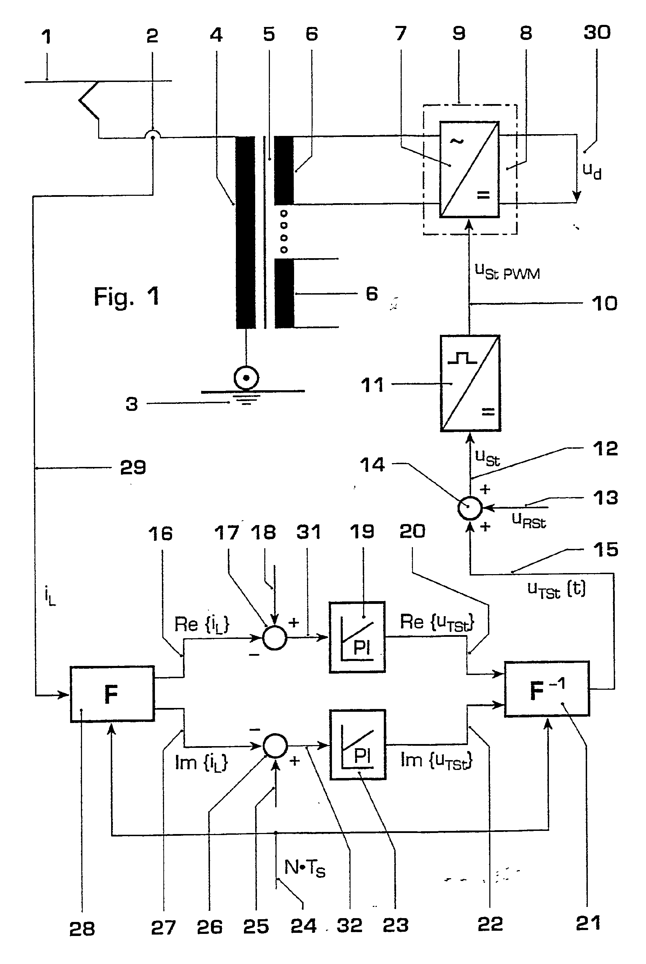

In Fig. 1 ist ein erfindungsgemässes Ausführungsbeispiel der Vorrichtung zur Durchführung des Verfahrens zur Regelung eines nichtharmonischen Anteils im Netzstrom eines netzseitigen Stromrichters 9 dargestellt. Ein gängiger Netztransformator 5 wird einerseits über seine Primärwicklung 4 von einem einphasigen Wechselspannungsnetz 1, insbesondere Wechselspannungsbahnnetz mit 16 2/3Hz und 15kV (oder 50 Hz und 25kV) gespeist und ist andererseits mit seiner Sekundärwicklung 6 mit einem netzseitigen Stromrichter 9 verbunden, der einen als Vierquadrantensteller ausgeführten Gleichrichter 7 mit einem gleichspannungsseitig angekoppeltem Gleichspannungszwischenkreis 8 umfasst. Die Primärwicklung 4 des Netztransformators 5 ist über eine Erdung 3 geerdet. Am Gleichspannungszwischenkreis 8 liegt die Zwischenkreisspannung 30 ($u_d$) an. Gängigerweise umfasst der Netztransformator 5, insbesondere für höhere Leistungsanforderungen, mehrere Sekundärwicklungen 6, wie in Fig. 1 angedeutet, an welche jeweils ein netzseitiger Stromrichter 9 der oben beschriebenen Art angekoppelt ist.

Ein Strommesswandler 2, welcher zwischen dem einphasigen Wechselspannungsnetz 1 und der Primärwicklung 4 des Netztransformators 5 angeordnet ist, dient der Erfassung des Signals eines Netzstromes 29 ($i_L$) des netzseitigen Stromrichters 9. Bei nur einem eingesetzten netzseitigen Stromrichter 9 entspricht der Netzstrom 29 ($i_L$) einem in der Sekundärwicklung 6 fliessenden und auf die Primärwicklung 4 des Netztransformators 5 übertragenen Strom. Bei mehreren eingesetzten Stromrichtern 9 entspricht der Netzstrom 29 ($i_L$) der Summe der in den einzelnen Sekundärwicklungen 6 fliessenden Ströme, welche als Summe auf die Primärwicklung 4 des Netztransfomators 5 übertragen werden. Der vom Strommesswandler 2 gemessene Netzstrom 29 ($i_L$) wird einem Fourierfunktionsbildner 28 (F) zugeführt. Mittels einer Fouriertransformation im Fourierfunktionsbildner 28 (F) wird aus dem Signal des Netzstromes 29 ($i_L$) jeweils ein Realteil 16 (Re{$i_L$}) des Netzstromes 29 ($i_L$) und ein Imaginärteil 27 (Im {$i_L$}) des Netzstromes 29 ($i_L$) gemäss folgenden Gleichungen gebildet:

$$Re\{i_L\} = \frac{2}{N \cdot T_S} \cdot \sum_{k=0}^{N-1} i_L(k \cdot T_S) \cdot \cos(2\pi \cdot \frac{k \cdot T_S}{N \cdot T_S}) \cdot T_S$$

$$Im\{i_L\} = \frac{2}{N \cdot T_S} \cdot \sum_{k=0}^{N-1} i_L(k \cdot T_S) \cdot (-\sin(2\pi \cdot \frac{k \cdot T_S}{N \cdot T_S})) \cdot T_S$$

mit N=Anzahl der Abtastpunkte (z.B. 20-100), $T_S$=Abtastperiodendauer und k=fortlaufende ganze Zahl. Mit Hilfe dieser Fouriertransformation im Fourierfunktionsbildner 28 (F) wird somit das Signal des Netzstromes 29 ($i_L$) vom Zeitbereich in den Frequenzbereich transformiert, so dass der oben genannte Realteil und Imaginärteil des Netzstromes 29 ($i_L$) gebildet werden. Dem Fourierfunktionsbildner 28 (F) wird an einem Eingang des Fourierfunktionsbildner 28 (F) ein parametrisierbarer Faktor 24 (N · $T_S$) zugeführt, mit dem die Breite 2/ (N · $T_S$) eines Frequenzfensters der Fouriertransformation des Fourierfunktionsbildners 28 (F) eingestellt wird. Das Frequenzfenster der Breite 2/(N · $T_S$) wird dabei durch den eingestellten Faktor 24 (N · $T_S$) um einen nichtharmonischen Anteil im Netzstrom 29 ($i_L$) bezogen auf die Netzwechselspannung so gelegt, dass dieser in seiner Amplitude im wesentlichen gefiltert wird und die Grundschwingung im Netzstrom 29 ($i_L$) in ihrer Amplitude im wesentlichen unterdrückt wird. Dabei wird die Phasenlage des nichtharmonischen Anteils im Netzstrom 29 ($i_L$) bezogen auf die Netzwechselspannung und die Phasenlage der Grundschwingung des Netzstromes 29 ($i_L$) im wesentlichen Null. Ein zusätzliches Kriterium für die Einstellung des Faktors 24 (N · $T_S$) ist, dass sämtliche harmonische Anteile im Netzstrom 29 ($i_L$) bezogen auf die Netzwechselspannung in ihren Amplituden im wesentlichen unterdrückt und in ihren Phasenlagen im wesentlichen Null werden.

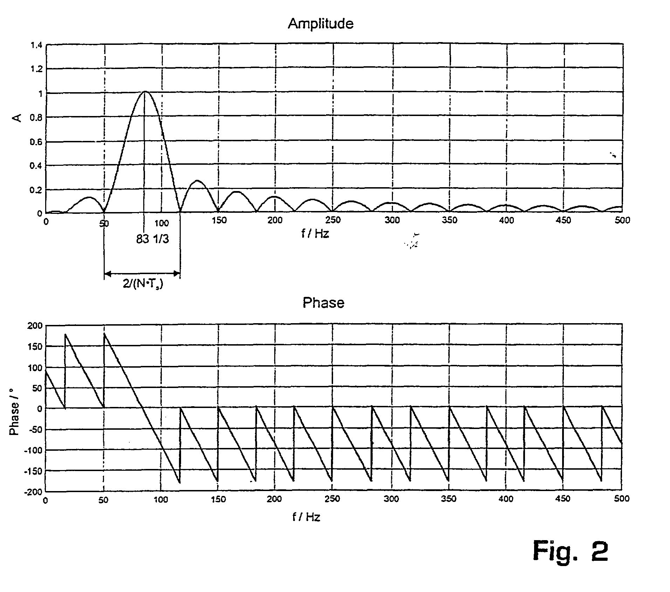

Fig. 2 zeigt beispielhaft einen Amplituden- und Phasengang im Frequenzbereich eines Fourierfunktionsbildners für einen nichtharmonischen Anteil von 83 1/3Hz im Netzstrom 29 ($i_L$) bezogen auf eine Netzwechselspannung von 50Hz und 25kV. Es sei an dieser Stelle angemerkt, dass dem Fourierfünktionsbildner aus Darstellungsgründen für Fig. 2 ein inverser Fourierfunktionsbildner nachgeschaltet ist, da nur so sinnvoll eine gewünschte Übertragungscharakteristik (Amplituden- und Phasengang) gezeigt werden kann. Bei dem in Fig. 2 dargestellten Amplituden- und Phasengang im Frequenzbereich wird vorteilhaft der Faktor N · $T_S$ = 1.5 · $T_L$ mit $T_L$=Periodendauer der Netzwechselspannung gewählt, welcher neben dem Fourierfunktionsbildner auch dem inversen Fourierfunktionsbildner für die Darstellung in Fig. 2 zugeführt wird. Mit dieser Einstellung des Faktors 24 (N · $T_S$) wird, wie der Amplitudengang zeigt, in gewünschter Weise der nichtharmonische 83 1/3Hz Anteil im Netzstrom 29 ($i_L$) bezogen auf die Netzwechselspannung in seiner Amplitude im wesentlichen durchgelassen bzw. gefiltert und die Grundschwingung sowie harmonische Anteile im Netzstrom 29 ($i_L$) bezogen auf die Netzwechselspannung in ihren Amplituden im wesentlichen unterdrückt. Der Phasengang zeigt ebenso das gewünschte Verhalten, dass nämlich die Phase beim nichtharmonischen 83 1/3 Hz Anteil im Netzstrom 29 ($i_L$) sowie in der Grundschwingung und in den harmonischen Anteilen des Netzstromes 29 ($i_L$) bezogen auf die Netzwechselspannung im wesentlichen Null ist.

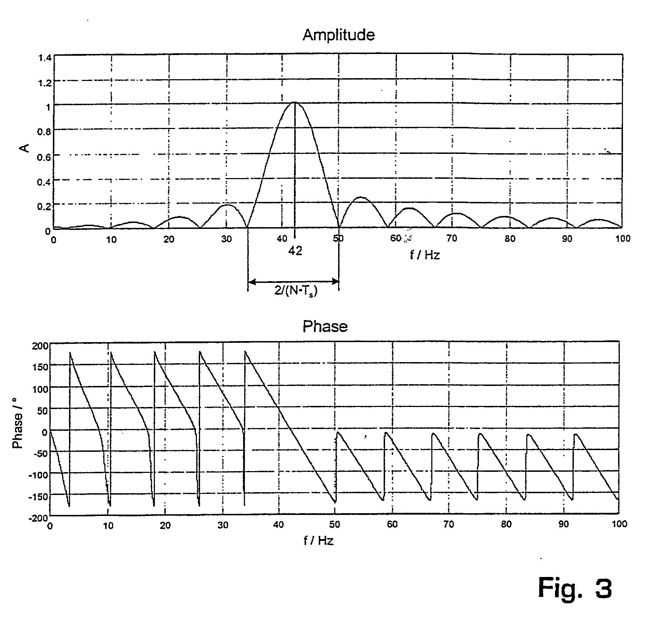

Fig. 3 zeigt beispielhaft einen Amplituden- und Phasengang im Frequenzbereich eines Fourierfunktionsbildners für einen nichtharmonischen Anteil von 42Hz im Netzstrom 29 ($i_L$) bezogen auf eine Netzwechselspannung von 16 2/3Hz und 25kV. Auch hier wurde zur Darstellung in Fig. 3 des Amplituden- und Phasenganges wieder ein inverse Fourierfunktionsbildner dem Fourierfunktionsbildner nachgeschaltet. Bei dem in Fig. 3 dargestellten Amplituden- und Phasengang im Frequenzbereich wird vorteilhaft der Faktor N·$T_S$ = 2·$T_L$ mit $T_L$=Periodendauer der Netzwechselspannung gewählt, welcher neben dem Fourierfunktionsbildner auch dem inversen Fourierfunktionsbildner für die Darstellung in Fig. 3 zugeführt wird. In ähnlicher Weise wie in Fig. 2 wird in Fig. 3 im Amplitudengang der nichtharmonische 42Hz Anteil im Netzstrom 29 ($i_L$) bezogen auf die Netzwechselspannung in seiner Amplitude im wesentlichen durchgelassen bzw. gefiltert und die Grundschwingung sowie harmonische Anteile im Netzstrom 29 ($i_L$) bezogen auf die Netzwechselspannung in ihren Amplituden im wesentlichen unterdrückt. Der Phasengang in Fig. 3 zeigt, dass beim nichtharmonischen 42Hz Anteil im Netzstrom 29 ($i_L$) bezogen auf die Netzwechselspannung sowie bei der Grundschwingung und bei harmonischen Anteilen bezogen auf die Netzwechselspannung die Phase im wesentlichen Null ist.

An einem ersten Ausgang des Fourierfunktionsbildners 28 (F) in Fig. 1 liegt zum einen der Realteil 16 ($Re\{i_L\}$) des Netzstromes ($i_L$) und an einem zweiten Ausgang liegt zum anderen der Imaginärteil 27 ($Im\{i_L\}$) des Netzstromes ($i_L$) an. Der Realteil 16 ($Re\{i_L\}$) des Netzstromes ($i_L$) wird auf einen Summierer 17 für den Realteil des Netzstromes ($i_L$) gegeben, dem ebenfalls ein Referenzrealteil 18 zugeführt wird. Am Summierer 17 für den Realteil wird vom Referenzrealteil 18 der Realteil 16 ($Re\{i_L\}$) des Netzstromes ($i_L$) subtrahiert. Diese Subtraktion bildet eine Realteilregelabweichung 31, welche einem Proportional-Intgral-Regler 19 (PI-Regler) für den Realteil des Netzstromes ($i_L$) über einen Eingang des PI-Reglers 19 für den Realteil zugeführt wird. Der PI-Regler 19 für den Realteil dient dazu, den Realteil 16 ($Re\{i_L\}$) des Netzstromes ($i_L$) auf den Referenzrealteil 18 auszuregeln, wobei der Referenzrealteil 18 in diesem Fall vorteilhaft den Wert 0A aufweist. Der PI-Regler 19 für den Realteil bildet als eine erste Stellgrösse an seinem Ausgang einen Realteil 20 ($Re\{u_{TSt}\}$) einer Teilsteuerspannung ($u_{TSt}$).

In ähnlicher Weise wie für den Realteil 16 ($Re\{i_L\}$) des Netzstromes ($i_L$) wird der am Ausgang des Fourierfunktionsbildners 28 (F) liegende Imaginärteil 27 ($Im\{i_L\}$) des Netzstromes ($i_L$) einem Summierer 26 für den Imaginärteil des Netzstromes ($i_L$) zugeführt, welchem ein Referenzimaginärteil 25 zugeführt wird. Am Summierer 26 für den Imaginärteil wird vom Referenzimaginärteil 25 der Imaginärteil 27 ($Im\{i_L\}$) subtrahiert, wobei diese Subtraktion eine Imaginärteilregelabweichung 32 bildet, die einem PI-Regler 23 für den Imaginärteil des Netzstromes ($i_L$) über einen Eingang des PI-Reglers 23 für den Imaginärteil zugeführt wird. Der PI-Regler 23 für den Imaginärteil dient dazu, den Imaginärteil 27 ($Im\{i_L\}$) des Netzstromes ($i_L$) auf den Referenzimaginärteil 25 auszuregeln, wobei der Referenzimaginärteil 25 in diesem Fall, wie schon zuvor der Referenzrealteil 18, vorteilhaft den Wert 0A aufweist. Der PI-Regler 23 für den Imaginärteil bildet an seinem Ausgang einen Imaginärteil 22 ($Im\{u_{TSt}\}$) einer Teilsteuerspannung ($u_{TSt}$) als eine zweite Stellgrösse. Mit dem Einsatz der PI-Regler 16 und 23 für den Realteil bzw. für den Imaginärteil ist es in besonders einfacher Weise und somit mit minimalem Aufwand möglich, den Realteil 16 ($Re\{i_L\}$) des Netzstromes ($i_L$) bzw. den Imaginärteil 27 ($Im\{i_L\}$) des Netzstromes ($i_L$) auf ihre Referenzwerte auszuregeln.

Der Realteil 20 ($Re\{u_{TSt}\}$) der Teilsteuerspannung ($u_{TSt}$) sowie der Imaginärteil 22 ($Im\{u_{TSt}\}$) der Teilsteuerspannung ($u_{TSt}$) werden einem inversen Fourierfunktionsbildner 21 ($F^{-1}$) zugeführt. Hierzu ist der PI-Regler (19) für den Realteil mit einem ersten Eingang eines inversen Fourierfunktionsbildners (21) ($F^{-1}$) und der PI-Regler (23) für den Imaginärteil mit einem zweiten Eingang des inversen Fourierfunktionsbildners (21) ($F^{-1}$) verbunden. Dieser inverse Fourierfunktionsbildner 21 ($F^{-1}$) führt eine inverse Fouriertransformation aus, d. h. aus dem Realteil 20 ($Re\{u_{TSt}\}$) der Teilsteuerspannung und dem Imaginärteil 22 ($Im\{u_{TSt}\}$) der Teilsteuerspannung wird gemäss folgender Gleichung eine Teilsteuerspannung 15 ($u_{TSt}$) im Zeitbereich erzeugt:

$$u_{TSt}(k \cdot T_s) = Re\{u_{TSt}\} \cdot \cos(2\pi \cdot \frac{k \cdot T_s}{N \cdot T_s}) - Im\{u_{TSt}\} \cdot \sin(2\pi \cdot \frac{k \cdot T_s}{N \cdot T_s})$$

mit N=Anzahl der Abtastpunkte (z.B. 20-100), $T_S$ Abtastperiodendauer, k=fortlaufende ganze Zahl und $k \cdot T_S$ = t = Zeit. Dabei wird, wie schon zuvor beim Fourierfunktionsbildner 28 (F), auch dem inversen Fourierfunktionsbildner 21 ($F^{-1}$) an einem Eingang des inversen Fourierfunktionsbildner 21 ($F^{-1}$) der Faktor 24 ($N \cdot T_S$) zugeführt, um eine korrekte Transformation der Teilsteuerspannung 15 ($u_{TSt}$) in den Zeitbereich zu erhalten.

Die am Ausgang des inversen Fouriertransformators 21 ($F^{-1}$) anliegende Teilsteuerspannung 15 ($u_{TSt}$) wird einem Summierer 14 für die Steuerspannung zugeführt, dem ebenfalls eine Reglersteuerspannung 13 ($u_{RSt}$) zugeführt wird. Die Reglersteuerspannung 13 ($u_{RSt}$) wird von einem aus dem Stand der Technik bekannten Stromregler für einen in der Sekundärwicklung 6 des Netztranformators 5 fliessenden Strom gebildet. Durch Summation der Teilsteuerspannung 15 ($u_{TSt}$) mit der Reglersteuerspannung 13 ($u_{RSt}$) am Summierer 14 für die Steuerspannung wird eine Steuerspannung 12 ($u_{St}$) gebildet, welche einem Pulsweitenmodulator 11 zugeführt wird, der daraus eine pulsweitenmodulierte Steuerspannung 10 ($u_{StPWM}$) generiert. Die pulsweitenmdulierte Steuerspannung 10 ($u_{StPWM}$) wird dem Gleichrichter 7 des netzseitigen Stromrichters 9 zugeführt, wobei diese der Ansteuerung von Leistungshalbleiterschalter des Gleichrichters 7 dient.

Es versteht sich, dass andere als die im Ausführungsbeispiel angegebene Schaltungen, Spannungen und Frequenzen verwendet werden können. Anstelle diskreter Bauelemente für die Regelung kann ein Mikroprozessor oder Rechner vorgesehen sein, auf dem die Berechnungen und Regelvorgänge ausgeführt werden.

**Bezugszeichenliste**

| | |
|---|---|
| 1 | einphasiges Wechselspannungsnetz |
| 2 | Strommesswandler |
| 3 | Erdung |
| 4 | Primärwicklung des Netztransformators |
| 5 | Netztransformator |
| 6 | Sekundärwicklung des Netztransformators |
| 7 | Gleichrichter, ausgeführt als Vierquadrantensteller |
| 8 | Gleichspannungszwischenkreis |
| 9 | netzseitiger Stromrichter |
| 10 | pulsweitenmdulierte Steuerspannung |
| 11 | Pulsweitenmodulator |
| 12 | Steuerspannung |
| 13 | Reglersteuerspannung |
| 14 | Summierer für die Steuerspannung |
| 15 | Teilsteuerspannung |
| 16 | Realteil des Netzstromes |
| 17 | Summierer für den Realteil des Netzstromes |
| 18 | Referenzrealteil |
| 19 | Proportional-Integral-Regler für den Realteil des Netzstromes |
| 20 | Realteil der Teilsteuerspannung |
| 21 | inverser Fourierfunktionsbildner |
| 22 | Imaginärteil der Teilsteuerspannung |
| 23 | Proportional-Integral -Regler für den Imaginärteil des Netzstromes |
| 24 | parametrisierbarer Faktor |
| 25 | Referenzimaginärteil |
| 26 | Summierer für den Imaginärteil des Netzstromes |
| 27 | Imaginärteil des Netzsromes |
| 28 | Fourierfunktionsbildner |
| 29 | Netzstrom |
| 30 | Zwischenkreisspannung |
| 31 | Realteilregelabweichung |
| 32 | Imaginärteilregelabweichung |

**Patentansprüche**

1. Verfahren zur Regelung eines nichtharmonischen Anteils im Netzstrom eines netzseitigen Stromrichters, welcher Netzstrom (29) ($i_L$) mittels eines zwischen einem einphasigen Wechselspannungsnetz (1) und einer Primärwicklung (5) eines Netztransformators (5) angeordneten Strommesswandlers (2) erfasst wird und einem Fourierfunktionsbildner (28) (F) zugeführt wird, **dadurch gekennzeichnet, dass** ein Realteil (16) (Re{$i_L$}) des Netzstromes (29) ($i_L$) und ein Imaginärteil (27) (Im{$i_L$}) des Netzstromes (29) ($i_L$) derart durch eine Fouriertransformation im Fourierfunktionsbildner (28) (F) gebildet werden, dass der nichtharmonische Anteil im Netzstrom (29) ($i_L$) in seiner Amplitude im wesentlichen gefiltert wird und seine Phasenlage im wesentlichen Null wird.

2. Verfahren nach Anspruch 1, **dadurch gekennzeichnet, dass** der Realteil (16) (Re{$i_L$}) des Netzstromes (29) ($i_L$) und der Imaginärteil (27) (Im{$i_L$}) des Netzstromes (29) ($i_L$) derart durch die Fouriertransformation gebildet werden, dass eine Grundschwingung im Netzstrom (29) ($i_L$) und sämtliche harmonische Anteile im Netzstrom (29) ($i_L$) in ihrer Amplitude im wesentlichen unterdrückt werden und ihre Phasenlagen im wesentlichen Null werden.

3. Verfahren nach Anspruch 2, **dadurch gekennzeichnet, dass** die Fouriertransformation mittels eines parametrisierbaren Faktors (24) $N \cdot T_S$ berechnet wird, wobei N eine Anzahl der Abtastpunkte und $T_S$ eine Abtastperiodendauer ist.

**4.** Verfahren nach Anspruch 3, **dadurch gekennzeichnet, dass** der Realteil (16) (Re{i$_L$}) des Netzstromes (29) (i$_L$) auf einen Referenzrealteil (18) hin derart ausgeregelt wird, dass als eine erste Stellgrösse ein Realteil (20) (Re{u$_{TSt}$}) einer Teilsteuerspannung gebildet wird.

**5.** Verfahren nach Anspruch 3, **dadurch gekennzeichnet, dass** der Imaginärteil (27) (Im{i$_L$}) des Netzstromes (29) (i$_L$) auf einen Referenzimaginärteil (25) hin derart ausgeregelt wird, dass als eine zweite Stellgrösse ein Imaginärteil (22) (Im{u$_{TSt}$}) einer Teilsteuerspannung gebildet wird.

**6.** Verfahren nach Anspruch 4 und 5, **dadurch gekennzeichnet, dass** mittels des Realteils (20) (Re{u$_{TSt}$}) der Teilsteuerspannung und des Imaginärteils (22) (Im{u$_{TSt}$}) der Teilsteuerspannung durch eine inverse Fouriertransformation eine Teilsteuerspannung (15) (u$_{TSt}$) gebildet wird.

**7.** Verfahren nach Anspruch 6, **dadurch gekennzeichnet, dass** die inverse Fouriertransformation mittels des parametrisierbaren Faktors (24) $N \cdot T_S$ berechnet wird.

**8.** Verfahren nach Anspruch 7, **dadurch gekennzeichnet, dass** die Teilsteuerspannung (15) (u$_{TSt}$) gemäss:

$$u_{TSt}\left(k \bullet T_s\right) = \mathrm{Re}\left\{u_{TSt}\right\} \bullet \cos\left(2\pi \bullet \frac{k \bullet T_s}{N \bullet T_s}\right) - \mathrm{Im}\left\{u_{TSt}\right\} \bullet \sin\left(2\pi \bullet \frac{k \bullet T_s}{N \bullet T_s}\right)$$

gebildet wird.

**9.** Verfahren nach Anspruch 3 und 7, **dadurch gekennzeichnet, dass** der parametrisierbare Faktor (24) $N \cdot T_S$ für einen nichtharmonischen Anteil von 83 1/3Hz im Netzstrom (29) (i$_L$) bezogen auf eine Netzwechselspannung von 50Hz und 25kV auf eine 1.5-fache Netzwechselspannungsperiodendauer (T$_L$) eingestellt wird.

**10.** Verfahren nach Anspruch 3 und 7, **dadurch gekennzeichnet, dass** der parametrisierbare Faktor (24) $N \cdot T_S$ für einen nichtharmonischen Anteil von 42Hz im Netzstrom (29) (i$_L$) bezogen auf eine Netzwechselspannung von 16 2/3Hz und 15kV auf eine zweifache Netzwechselspannungsperiodendauer (T$_L$) eingestellt wird.

**11.** Verfahren nach Anspruch 8, **dadurch gekennzeichnet, dass** durch Addition der Teilsteuerspannung (15) (u$_{TSt}$) mit einer Reglersteuerspannung (13) (u$_{RSt}$) eine Steuerspannung (12) (u$_{St}$) gebildet wird, welche einem Pulsweitenmodulator (11) zugeführt wird.

**12.** Vorrichtung zur Durchführung eines Verfahrens zur Regelung eines nichtharmonischen Anteils im Netzstrom eines netzseitigen Stromrichters, umfassend einen Strommesswandler (2), welcher zwischen einem einphasigen Wechselspannungsnetz (1) und einer Primärwicklung (4) eines Netztransformators (5) eines netzseitigen Stromrichters (9) angebracht ist und mit einem Fourierfunktionsbildner (28) (F) verbunden ist, **dadurch gekennzeichnet, dass** der Fourierfunktionsbildner (28) (F) einen Eingang für einen parametrisierbaren Faktor (24) $N \cdot T_S$ aufweist, dass der Fourierfunktionsbildner (28) (F) mittels des parametrisierbaren Faktors (24) $N \cdot T_S$ auf eine Breite 2/($N \cdot T_S$) eines Frequenzfensters der Fouriertransformation des Fourierfunktionsbildners (28) (F) einstellbar ist, wobei N eine Anzahl von Abtastpunkten und T$_S$ eine Abtastperiodendauer ist, dass ein erster Ausgang des Fourierfunktionsbildners (28) (F) mit einem Summierer (17) für den Realteil des Netzstromes (i$_L$) verbunden ist, dass ein zweiter Ausgang des Fourierfunktionsbildners (28) (F) mit einem Summierer (26) für den Imaginärteil des Netzstromes (i$_L$) verbunden ist, dass ein Proportional-Integral-Regler (19) für den Realteil des Netzstromes (i$_L$) an seinem Eingang mit dem Summierer (17) für den Realteil verbunden ist, dass ein Proportional-Integral-Regler (23) für den Imaginärteil des Netzstromes (i$_L$) an seinem Eingang mit dem Summierer (26) für den Imaginärteil verbunden ist, dass der Proportional-Integral-Regler (19) für den Realteil mit einem ersten Eingang eines inversen Fourierfunktionsbildners (21) (F$^{-1}$) verbunden ist und dass der Proportional-Integral-Regler (23) für den Imaginärteil mit einem zweiten Eingang des inversen Fourierfunktionsbildners (21) (F$^{-1}$) verbunden ist.

**13.** Vorrichtung nach Anspruch 12, **dadurch gekennzeichnet, dass** der inverse Fourierfunktionsbildner (21) (F$^{-1}$) einen Eingang für den parametrisierbaren Faktor (24) $N \cdot T_S$ aufweist und dass sein Ausgang mit einem Summierer (17) für eine Steuerspannung verbunden ist.

**Claims**

1. Method for regulating an anharmonic portion in the mains current of a static power converter on the mains side, which detects a mains current (29) ($i_L$) by means of a current measuring transducer (2), which is disposed between a single phase alternating voltage network (1) and a primary winding (4) of a network transformer (5) and supplied to a Fourier function former (28) (F), **characterized in that** a real part (16) (Re($i_L$)) and an imaginary part (27) (Im{$i_L$}) of the mains current (29) ($i_L$) are formed in such a manner by a Fourier transformation in the Fourier function former (28) (F), that the anharmonic portion in the mains current (29) ($i_L$) is filtered essentially in its amplitude and becomes essentially zero in its phase position.

2. The method of claim 1, **characterized in that** the real part (16) (Re{$i_L$}) of the mains current (29) ($i_L$) and the imaginary part (27) (Im{$i_L$}) of the mains current (29) ($i_L$) are formed in such a manner by the Fourier transformation, that a fundamental wave in the mains current (29) ($i_L$) and all harmonic portions in the mains current (29) ($i_L$) are essentially suppressed in their amplitude and become essentially zero in their phase positions.

3. The method of claim 2, **characterized in that** the Fourier transformation is calculated by means of a parameterizable factor (24) N • $T_s$, N being the number of scanning points and $T_s$ the duration of a scanning period.

4. The method of claim 3, **characterized in that** the real portion (16) (Re{$i_L$}) of the mains current (29) ($i_L$) is settled on a reference real part (18) in such a manner, that a real part (20) (Re{$u_{TSt}$}) of a partial control voltage is formed as a first control variable.

5. The method of claim 3, **characterized in that** the imaginary part (27) (Im{$i_L$}) of the mains current (29) ($i_L$) is settled on a reference imaginary part (25) in such a manner, that an imaginary part (22) (Im{$u_{TSt}$} of a partial control voltage is formed as a second control variable.

6. The method of claims 4 and 5, **characterized in that** a partial control voltage (15) ($u_{TSt}$) is formed by an inverse Fourier transformation by means of the real part (20) (Re{$u_{TSt}$}) of the partial control voltage and of the imaginary part (22) (Im{$u_{TSt}$}) of the partial control voltage.

7. The method of claim 6, **characterized in that** the inverse Fourier transformation is calculated by means of the parameterizable factor (24) N • $T_s$.

8. The method of claim 7, **characterized in that** the partial control voltage (15) ($u_{TSt}$) is formed according to

$$u_{TS}(k \cdot T_s) = \text{Re}\{u_{TS}\} \cdot \cos\left(2\pi \cdot \frac{k \cdot T_s}{N \cdot T_s}\right) - \text{Im}\{u_{TS}\} \cdot \sin\left(2\pi \cdot \frac{k \cdot T_s}{N \cdot T_s}\right)$$

9. The method of claims 3 and 7, **characterized in that** the parameterizable factor (24) N • $T_s$ for an anharmonic portion of 83 1/3 Hz in the mains current (29) ($i_L$), based on a mains ac voltage of 50 Hz and 25 kV, is adjusted to a 1.5-fold mains ac voltage period duration ($T_L$).

10. The method of claims 3 and 7, **characterized in that** the parameterizable factor (24) N • $T_s$ for an anharmonic portion of 42 Hz in the mains current (29) ($i_L$), based on a mains ac voltage of 16 2/3 Hz and 15 kV, is adjusted to a 2-fold mains ac voltage period duration ($T_L$).

11. The method of claim 8, **characterized in that** a control voltage (12) ($u_{St}$), which is supplied to a pulse width modulator (11), is formed by the addition of a regulator control voltage (13) ($u_{RSt}$) to a partial control voltage (15) ($u_{TSt}$).

12. Device for carrying out a method for regulating an anharmonic portion in the mains current of a static power converter on the mains side, comprising a current measuring transducer (2), which is disposed between a single phase alternating voltage network (1) and a primary winding (4) of a network transformer (5) of a static power converter (9) on the mains side and is connected with a Fourier function former (28) (F), **characterized in that** the Fourier function former (28) (F) has an input for a parameterizable factor (24) N • $T_s$, that the Fourier function former (28) (F) can be adjusted by means of the parameterizable factor (24) $N \cdot T_s$ to a width of $2/(N \cdot T_s)$ of a frequency window of the Fourier transformation of the Fourier function former (28) (F), N being a number of scanning points and $T_s$ being the duration of a scanning point, that a first output of the Fourier function former (28) (F) is connected with a summation device (17) for the real part of the mains current ($i_L$), that a second output of the Fourier function former (28) (F) is connected with a summation device (26) for the imaginary part of the mains current ($i_L$), that a proportional integral controller (19) for the real part of the mains current ($i_L$) is connected at its input with the summation device (17) for the real part, that a proportional integral controller (23) for the imaginary part of the mains current ($i_L$) is connected at its input with the summation device (26) for the imaginary part, that the proportional integral controller (19) for the real part is connected with a first input of an inverse Fourier function former (21) ($F^1$) and that the proportional integral controller (23) for the imaginary part is connected with a second input of the inverse Fourier function former (21) ($F^1$).

13. The device of claim 12, **characterized in that** the inverse Fourier function former (21) ($F^1$) has an input for the parameterizable factor (24) $N \cdot T_S$ and that its output is connected with a summation device (17) for a control voltage.

**Revendications**

1. Procédé pour la régulation d'une composante non harmonieuse dans le courant de secteur d'un convertisseur du côté du réseau électrique, lequel courant du secteur (29) ($i_L$) est mesuré à l'aide d'un transformateur ampèremétrique (2) disposé entre un réseau de tension alternative monophasé (1) et un enroulement du circuit primaire (4) d'un transformateur de puissance (5) et est amené vers un générateur de fonction de Fourier (28) (F), **caractérisé en ce qu'**une composante réelle (16) (Re{$i_L$}) du courant de secteur (29) ($i_L$) et une composante imaginaire (27) (Im{$i_L$}) du courant de secteur (29) ($i_L$) sont formées grâce à une transformation de Fourier dans le générateur de fonction de transformation de Fourier (28) (F) de manière à ce que la composante non harmonieuse dans le courant de secteur (29) ($i_L$) est essentiellement filtrée en ce qui concerne son amplitude et que sa position de phase devient essentiellement nulle.

2. Procédé selon la revendication 1, **caractérisé en ce que** la composante réelle (16) (Re{$i_L$}) du courant de secteur (29) ($i_L$) et la composante imaginaire (27) (Im{$i_L$}) du courant de secteur (29) ($i_L$) sont formées grâce à la transformation de Fourier de manière à ce qu'une oscillation de base dans le courant du secteur (29) ($i_L$) et l'ensemble des composantes harmonieuses dans le courant de secteur (29) ($i_L$) sont essentiellement atténuées concernant leur amplitude et que leurs positions de phase deviennent essentiellement nulles.

3. Procédé selon la revendication 2, **caractérisé en ce que** la transformation de Fourier est calculée à l'aide d'un facteur paramétrable (24) $N \cdot T_s$, N étant un nombre de points d'analyse et $T_s$ une durée de période d'analyse.

4. Procédé selon la revendication 3, **caractérisé en ce que** la composante réelle (16) (Re{$i_L$}) du courant de secteur (29) ($i_L$) est parfaitement réglée en fonction d'une composante réelle de référence (18) de manière à ce, en tant que première grandeur de réglage, une composante réelle (20) (Re{$U_{Tst}$}) d'une tension de commande partielle est formée.

5. Procédé selon la revendication 3, **caractérisé en ce que** la composante imaginaire (27) (Tm{$i_L$}) du courant de secteur (29) ($i_L$) est parfaitement réglée en fonction d'une composante imaginaire de référence (25) de manière à ce qu'une composante imaginaire (22) (Im{$U_{Tst}$}) d'une tension de commande partielle est formée en tant que deuxième grandeur de réglage.

6. Procédé selon les revendications 4 et 5, **caractérisé en ce qu'**à l'aide de la composante réelle (20) (Re{$U_{Tst}$}) de la tension de commande partielle et de la composante imaginaire (22) (Im{$U_{Tst}$}) de la tension de commande partielle, une tension de commande partielle (15) ($U_{Tst}$) est formée grâce à une transformation de Fourier inverse.

7. Procédé selon la revendication 6, **caractérisé en ce que** la transformation de Fourier inverse est calculée à l'aide du facteur paramétrable (24) $N \cdot T_s$.

8. Procédé selon la revendication 7, **caractérisé en ce que** la tension de commande partielle (15) ($u_{Tst}$) est formée d'après :

$$u_{rs}(k \bullet T_s) = \mathrm{Re}\{u_{rs}\} \bullet \cos\left(2\pi \bullet \frac{k \bullet T_s}{N \bullet T_s}\right) - \mathrm{Im}\{u_{rs}\} \bullet \sin\left(2\pi \bullet \frac{k \bullet T_s}{N \bullet T_s}\right)$$

**9.** Procédé selon les revendications 3 et 7, **caractérisé en ce que** le facteur paramétrable (24) N • $T_s$ est réglé pour une composante non harmonieuse de 83 1/3Hz dans le courant de secteur (29) ($i_L$) compte tenu d'une tension alternative de secteur de 50Hz et de 25kV, à une durée de période de tension alternative de secteur de 1,5 fois ($T_L$).

**10.** Procédé selon les revendications 3 et 7, **caractérisé en ce que** le facteur paramétrable (24) N • $T_s$ est réglé pour une composante non harmonieuse de 42Hz dans le courant du secteur (29) ($i_L$) compte tenu d'une tension alternative du secteur de 16 2/3Hz et de 15kV, à une double durée de période de tension alternative de secteur ($T_L$).

**11.** Procédé selon la revendication 8, **caractérisé en ce que**, grâce à l'addition de la tension de commande partielle (15) ($U_{Tst}$) et d'une tension de commande de réglage (13) ($U_{RST}$) une tension de commande (12) ($U_{St}$) est formée, laquelle est amenée vers un modulateur des impulsions en largeur (11).

**12.** Dispositif pour la réalisation d'un procédé pour le réglage d'une composante non harmonieuse dans le courant de secteur d'un convertisseur du côté du réseau électrique, comprenant un transformateur ampèremétrique (2) aménagé entre un réseau de tension alternative monophasé (1) et un enroulement du circuit primaire (4) d'un transformateur de puissance (5) d'un convertisseur (9) du côté du réseau électrique et en liaison avec un générateur de fonction de Fourier (28) (F), **caractérisé en ce que** le générateur de fonction de Fourier (28) (F) présente une entrée pour un facteur paramétrable (24) N • $T_s$, **en ce que** le générateur de fonction de Fourier (28) (F) peut être réglé à l'aide du facteur paramétrable (24) N • $T_s$ à une largeur de 2/(N • $T_s$) d'une fenêtre de fréquences de la transformation de Fourier du générateur de fonction de Fourier (28) (F), N étant un nombre de points d'analyse et $T_s$ une durée de période d'analyse, **en ce qu'**une première sortie du générateur de fonction de Fourier (28) (F) est en liaison avec un additionneur (17) pour la composante réelle du courant du secteur ($i_L$), **en ce qu'**une deuxième sortie du générateur de fonction de Fourier (28) (F) est en liaison avec un additionneur (26) pour la composante imaginaire du courant de secteur ($i_L$), **en ce qu'**un régulateur proportionnel et intégral (19) pour la composante réelle du courant du secteur ($i_L$) est en liaison au niveau de son entrée avec l'additionneur (17) pour la composante réelle, **en ce qu'**un régulateur proportionnel et intégral (23) pour la composante imaginaire du courant du secteur ($i_L$) est en liaison au niveau de son entrée avec l'additionneur (26) pour la composante imaginaire, **en ce que** le régulateur proportionnel et intégral (19) pour la composante réelle est en liaison avec une première entrée d'un générateur de fonction de Fourier inverse (21) (F[1]), et **en ce que** le régulateur proportionnel et intégral (23) pour la composante imaginaire est en liaison avec une deuxième entrée du générateur de fonction de Fourier inverse (21) (F[1]).

**13.** Dispositif selon la revendication 12, **caractérisé en ce que** le générateur de fonction de Fourier inverse (21) (F[1]) présente une entrée pour le facteur paramétrable (24) N • $T_s$ et **en ce que** sa sortie est en liaison avec un additionneur (17) pour une tension de commande.

**Fig. 1**

$u_d$

$u_{St\,PWM}$

$u_{St}$

$u_{RSt}$

$u_{TSt}\,(t)$

$i_L$

Re $\{i_L\}$

$+$

$-$

Re $\{u_{TSt}\}$

$F$

$F^{-1}$

$-$

Im $\{i_L\}$

$+$

PI

Im $\{u_{TSt}\}$

$N \cdot T_S$

Fig. 2

## Amplitude

## Phase

# Fig. 3